# EUROPÄISCHE PATENTANMELDUNG

(11) **EP 4 242 613 A1**
(43) Veröffentlichungstag der Anmeldung: **13.09.2023**
(21) Anmeldenummer: 22161239.3
(22) Anmeldetag: 10.03.2022
(51) Int. Cl.: G01K 7/18, G01K 1/14

(54) **FLEXIBLE SENSOREINHEIT ZUR TEMPERATURMESSUNG AN LEISTUNGSKONTAKTEN FÜR DIE E-MOBILITÄT**

(71) Anmelder: Yageo Nexensos GmbH, 63801 Kleinostheim (DE)
(72) Erfinder: Sattler, Mario, 63801 Kleinostheim (DE); Muziol, Matthias, 63801 Kleinostheim (DE); Bleifuß, Martin, 63801 Kleinostheim (DE); Schwappach, Bastian, 63801 Kleinostheim (DE); Xiang, Hengshi, SHANGHAI, 201108 (CN); Nick, Christoph, 63801 Kleinostheim (DE)
(74) Vertreter: Meissner Bolte Partnerschaft mbB

(57) **Zusammenfassung**

Die Erfindung betrifft einen Temperatursensor aufweisend ein isolierendes Polymersubstrat, mindestens zwei Anschlussleitungen und mindestens ein Widerstandssensorelement, wobei die mindestens zwei Anschlussleitungen auf dem Polymersubstrat angeordnet sind, wobei das mindestens eine Widerstandssensorelement mit den Anschlussleitungen verbunden ist und wobei das mindestens eine Widerstandssensorelement und die Anschlussleitungen zumindest teilweise von einer Abdeckschicht aufweisend ein flexibles Polymer bedeckt sind. Weiterhin betrifft die Erfindung ein Steckverbindungselement aufweisend diesen Temperatursensor sowie ein automatisiertes Herstellungsverfahren für dieses Steckverbindungselement.

## Beschreibung

Die Erfindung betrifft einen Temperatursensor aufweisend ein Widerstandssensorelement, insbesondere ein Platin-Widerstandssensorelement, das zwischen einem isolierenden Polymersubstrat und einer Abdeckschicht angeordnet ist, die ein flexibles Polymer aufweist. Weiterhin betrifft die Erfindung ein Steckverbindungselement aufweisend ein metallisches Leitungselement, auf dem der Temperatursensor angeordnet ist, sowie ein automatisiertes Herstellungsverfahren für dieses Steckverbindungselement.

Steckverbindungselemente zum Laden von Batterien, z.B. für Elektroautos (LKW oder PKW), müssen sehr hohe Ströme leiten. Bei zu hohen Strömen oder schlechter Kontaktierung kann sich der Ladestecker aufheizen und im schlimmsten Fall zu einer Zerstörung des Steckers oder den damit verbundenen Komponenten führen. Deshalb weisen Ladestecker oder Ladebuchsen typischer Weise Temperatursensoren auf, die messen, ob die Arbeitstemperatur im vorgegebenen Bereich liegt. Im Folgenden kann der Einfachheit halber der Begriff Ladestecker sowohl den Ladestecker selbst als auch die Ladebuchse beschreiben. Wenn die Temperatur des Ladesteckers einen vorgegebenen Wert übersteigt wird die Ladeleistung heruntergeregelt oder der Ladevorgang unterbrochen, um Schäden zu vermeiden und eine hohe Sicherheit für den Benutzer zu gewährleisten.

Um ein schnelles Ansprechverhalten zu ermöglichen, sollte der Temperatursensor möglichst direkt an dem Leitungselement des Ladesteckers angebracht sein, sodass die Temperatur direkt dort gemessen wird, wo hohe Ströme geleitet werden oder über Grenzflächen und Kopplungsbereiche fließen. Temperatursensoren im Stand der Technik sind häufig in einem Abstand zum Leitungselement in einer Halterung angeordnet und die real am Leitungselement vorhandene Temperatur wird extrapoliert. Ein Beispiel für eine solche Konstruktion findet sich in WO2020065449A1.

Um Ladeanschlüsse günstiger produzieren zu können, ist es wünschenswert, die Fertigung von Ladesteckern mit integrierter Temperaturüberwachung zu automatisieren. Die derzeit zur Verfügung stehenden Temperatursensoren sind jedoch für eine automatische Fertigung des Ladesteckers nur unzureichend geeignet. Insbesondere sind die Anschlussleitungen der Sensoren als flexible freiliegende Drähte ausgeführt, was eine automatische Verarbeitung erschwert. Aus anderen technischen Bereichen sind allerdings automatisierte Bestückungsverfahren bekannt. In Fertigungslinien, z.B. in der Halbleiterindustrie, werden üblicherweise Temperatursensoren verwendet, die auf einem Transportband (auch Blistergurt genannt) montiert sind und mit einem Greif-Roboter von diesem gegriffen und an die gewünschte Stelle im Bauteil gesetzt werden. Dieser Prozess ist etabliert und wird insbesondere bei der Bestückung von PCBs mit SMD-Temperatursensoren verwendet. Eine solche direkte Platzierung eines SMD-Temperatursensors mittels eines Pick-and-Place Roboters in oder an einem Leitungselement eines Ladesteckers ist jedoch schwierig oder nicht möglich, da der SMD-Temperatursensor typischer Weise in eine Vertiefung in einem Pin oder der Buchse angeordnet wird. Diese Vertiefungen sind für automatisiert arbeitende Greifroboter zu schlecht zugänglich.

Die Kontaktierung des Sensors nach der Positionierung in oder am Leitungselement stellt eine weitere Herausforderung dar. Wünschenswert wäre eine Kontaktierung des Temperatursensors im Ladestecker, die auf bewegliche Drähte und Kabel verzichtet. Derzeit werden in Ladesteckern bereits Temperatursensoren verbaut, die bereits mit Anschlussdrähten versehen sind. Diese werden manuell in eine Aufnahme in dem Leitungselement eines Ladesteckers eingeführt und dort fixiert. Anschließend erfolgt die Kontaktierung der Anschlussdrähte. Dieses Konzept lässt sich allerdings nur schwer in einen automatischen Prozess überführen. Die verwendeten Sensoren sind meist mechanisch zu starr und die Lage der beweglichen Anschlussdrähte schwankt zu stark. Daher ist es schwierig die losen Enden der Anschlussdrähte in einem automatischen Prozess zu kontaktieren.

Ein weiterer Aspekt, der bei der Anordnung von Temperatursensoren auf Leitungselementen eines Ladesteckers berücksichtigt werden muss, ist die elektrische Isolierung. Der Potenzialunterschied zwischen dem temperaturüberwachten Steckverbindungselement und dem Gehäuse kann bis zu 1000 V betragen. Daher ist es herausfordernd die elektrische Isolierung des Sensors gegenüber dem auf hohem Potential liegenden Leitungselement zu gewährleisten.

In Anbetracht der Probleme des Stands der Technik war es eine Aufgabe der Erfindung einen Temperatursensor bereitzustellen, der mindestens eines der Probleme des Stands der Technik löst. Insbesondere war es eine Aufgabe einen Temperatursensor bereitzustellen, der möglichst flach, flexibel und gut gegen elektrischen Durchschlag isoliert ist. Gleichzeitig sollte der Temperatursensor eine möglichst hohe Messpräzision ermöglichen.

Eine weitere Aufgabe bestand darin einen Temperatursensor bereitzustellen, der in einem automatisierten Prozess in einem Ladestecker verbaut werden kann.

Weiterhin war es eine Aufgabe der Erfindung ein Steckverbindungselement bereitzustellen, bei dem die Temperatur so nah wie möglich am Leitungselement gemessen werden kann. Eine zusätzliche Aufgabe bestand darin ein Verfahren bereitzustellen, dass den Herstellungsaufwand für die Herstellung von Steckverbindungselementen reduziert und auf manuelle Schritte verzichten kann.

Mindestens eine Aufgabe wird gelöst durch die Gegenstände der unabhängigen Ansprüche. Die abhängigen Ansprüche stellen bevorzugte Ausführungsformen dar.

In einem ersten Aspekt betrifft die Erfindung einen Temperatursensor aufweisend ein isolierendes Polymersubstrat, mindestens zwei Anschlussleitungen und mindestens ein Widerstandssensorelement, wobei die mindestens zwei Anschlussleitungen auf dem Polymersubstrat angeordnet sind, wobei das mindestens eine Widerstandssensorelement mit den Anschlussleitungen verbunden ist und wobei das mindestens eine Widerstandssensorelement und die Anschlussleitungen zumindest teilweise von einer Abdeckschicht aufweisend ein flexibles Polymer bedeckt sind.

Der Temperatursensor weist ein isolierendes Polymersubstrat auf. Das isolierende Polymersubstrat ist ein elektrisch isolierendes Polymersubstrat und weist vorzugsweise eine Durchschlagsfestigkeit von mindestens 100 KV/mm, insbesondere von mindestens 300 KV/mm auf. Das Material des isolierenden Polymersubstrats kann beispielsweise ausgewählt sein aus der Gruppe bestehend aus Silikonen, Polyimiden, Parylenen und Epoxiden. Optional kann das isolierende Polymersubstrat weitere Komponenten wie Zwischenschichten aus Metall, Adhäsionsmitteln und/oder Additive und/oder Füllstoffe zur Verbesserung der thermischen Leitfähigkeit aufweisen.

Die Dicke des isolierenden Polymersubstrats liegt im Bereich 10 µm bis 300 µm, bevorzugt im Bereich von 25 µm bis 100 µm. In einer bevorzugten Ausführung weist das isolierende Polymersubstrat eine Breite im Bereich von 2 mm bis 20 mm und eine Länge im Bereich von 20 mm bis 100 mm auf. Das isolierende Polymersubstrat kann jede beliebige Form aufweisen, die der Fachmann für praktikabel hält. Beispielsweise kann das isolierende Polymersubstrat Perforationen, Öffnungen oder Ausnehmungen aufweisen. In einer weiteren möglichen Ausführung kann das Polymersubstrat Verstärkungsstrukturen, wie z.B. Flachdrähte aufweisen, die für eine zusätzliche Stabilisierung, etwa bei Verwindung, sorgen können. Alternativ können zusätzliche Strukturen, wie z.B. Metalldrähte, enthalten sein, die eine Fixierung des gefertigten Temperatursensors in gebogener Montageposition ermöglichen.

In einer bevorzugten Ausführungsform ist auf mindestens einer Seite des isolierenden Polymersubstrats ein Klebstoff, insbesondere ein Haftklebstoff (engl. *pressure sensitive adhesive)* anwesend, insbesondere in Form einer Schicht oder einer vollflächigen Schicht.

Weiterhin weist der Temperatursensor mindestens zwei Anschlussleitungen auf. Die Anschlussleitungen sind auf dem isolierenden Polymersubstrat angeordnet. Jede der

Anschlussleitungen weist typischer Weise ein Landepad zur Kontaktierung eines Widerstandssensorelements und ein Anschlusspad zur Kontaktierung einer weiteren Komponente, z.B. einer Leiterplatte, auf. Landepad und Anschlusspad sind üblicher Weise an gegenüberliegenden Enden einer Anschlussleitung angeordnet und über diese elektrisch miteinander verbunden.

Die Anschlussleitungen, die Landepads und die Anschlusspads weisen jeweils eine Dicke von maximal 50 µm auf. Die Mindestdicke beträgt typischer Weise 5 µm. Die Landepads und die Anschlusspads können jeweils Teil der Anschlussleitung sein oder in einem oder mehreren Schritten nachträglich aufgetragen werden. Beispielsweise können die Landepads und die Anschlusspads aufgedruckt, aufgedampft oder galvanisch abgeschieden werden.

Die Anschlussleitungen sind auf dem isolierenden Polymersubstrat angeordnet, insbesondere fixiert. Die Anschlussleitungen weisen bevorzugt ein Metall auf oder bestehen daraus. Das Metall der Anschlussleitungen kann vorzugsweise ausgewählt sein aus Kupfer, Silber, Gold, Platin, Palladium, Zinn, Nickel und Eisen sowie Mischungen daraus.

Die mindestens zwei Anschlussleitungen können stoffschlüssig oder kraftschlüssig mit dem isolierendenden Polymersubstrat verbunden sein. Die Anschlussleitungen können auf verschiedenen Wegen hergestellt sein. Es ist beispielsweise möglich die Anschlussleitungen aus strukturierten Folien herzustellen und anschließend auf dem isolierendenden Polymersubstrat anzuordnen und über eine Abdeckschicht ein zu laminieren. In einer weiteren Alternative können die Anschlussleitungen aus einer Metall-Dünnschicht hergestellt werden, die zuerst flächig auf das isolierende Polymersubstrat aufgetragen wird, z.B. mittels PVD, CVD, und anschließend zu Anschlussleitungen strukturiert wird, beispielsweise mit Hilfe eines Lasers, mittels Ätzens oder mittels Fräsens. Weiterhin können die Anschlussleitungen aus einer metallhaltigen Zusammensetzung gedruckt werden, z.B. mittels Siebdruckes. Gegebenenfalls können auch Kombinationen der vorgenannten Verfahren verwendet werden, um die Anschlussleitungen herzustellen.

Erfindungsgemäß weist der Temperatursensor mindestens zwei Anschlussleitungen auf. Optional kann der Temperatursensor auch drei, vier, fünf oder mehr Anschlussleitungen aufweisen. In einer besonders bevorzugten Ausführung weist der Temperatursensor vier Anschlussleitungen auf, um den Sensor mittels einer Vierpunktschaltung auszulesen.

Die Anschlussleitungen sind vorzugsweise so auf dem isolierenden Polymersubstrat angeordnet, dass die Anschlusspads zum Rand des isolierenden Polymersubstrats weisen. Besonders bevorzugt reichen die Anschlusspads bis an eine Kante des isolierenden Polymersubstrats. Dies ermöglicht eine besonders einfache Kontaktierung der Anschlusspads, z. B. an einer Leiterplatte.

In einer möglichen Ausführung sind die Anschlussleitungen an ihren Kanten abgeflacht, sodass eine Abdeckschicht, insbesondere in Form einer Folie, die Anschlussleitungen möglichst konformal, also enganliegend, bedecken kann.

Der Temperatursensor weist mindestens ein Widerstandssensorelement auf, der vorzugsweise ausgewählt ist aus einem Metall- oder Halbleiter-basierten PTC, einem Metall- oder Halbleiter-basierten NTC und einem KTY.

Bevorzugt weist das mindestens eine Widerstandssensorelement eine metallische Leiterbahn auf. Die Leiterbahn kann eine beliebige Struktur haben. Die Leiterbahn weist beispielsweise eine Mäanderstruktur auf. Vorzugsweise enthält die metallische Leiterbahn ein Metall oder sie besteht daraus. Das Metall der Leiterbahn kann vorzugsweise ausgebildet sein aus der Gruppe bestehend aus Edelmetallen und Nicht-Edelmetallen. Edelmetalle können ausgewählt sein aus der Gruppe bestehend aus Gold, Silber, Platin, Palladium Rhodium oder Iridium.

Nicht-Edelmetalle können ausgewählt sein aus der Gruppe bestehend aus Aluminium, Kupfer oder Nickel.

Das Metall kann ein elementares Metall oder eine Legierung aufweisen oder daraus bestehen.

In einer bevorzugten Ausführungsform ist das Metall eine Legierung. Die Legierung kann ein Edelmetall enthalten, das ausgewählt ist aus der Gruppe bestehend aus Gold, Silber, Platin, Palladium, Rhodium oder Iridium. Bevorzugt enthält die Legierung zwei oder mehr Edelmetalle. Beispielsweise kann die Legierung eine Silberlegierung oder eine Silber-PlatinLegierung sein. In einer anderen Ausführungsform kann die Legierung mindestens ein Edelmetall und mindestens ein Nicht-Edelmetall aufweisen. Optional kann die Legierung sowohl Edelmetall als auch Nicht-Edelmetall aufweisen. Weiterhin ist es möglich, dass die Legierung Nicht-Metalle umfasst.

In dem Widerstandssensorelement ist die metallische Leiterbahn bevorzugt auf einem organischen oder einem anorganischen Träger angeordnet, insbesondere stoffschlüssig fixiert. Der organische Träger kann ein Polymer enthalten. Der anorganische Träger kann ein Glas, einen Halbleiter, z.B. Silizium oder eine Keramik umfassen. Der keramische Träger kann eine Oxidkeramik aufweisen oder daraus bestehen, wie zum Beispiel Aluminiumoxid oder Siliziumoxid.

Besonders bevorzugt ist das Widerstandssensorelement ein Platinwiderstandssensor, insbesondere ein PT100, ein PT1000 oder ein PT2500, also ein Platinwiderstandssensor mit einem Nennwiderstand von 100 Ohm, 1000 Ohm bzw. 2500 Ohm. Platinwiderstandssensoren haben den Vorteil einer hohen Messgenauigkeit, einer geraden Kennlinie in einem weiten Temperaturbereich und einer hohen Stabilität.

Besonders bevorzugt ist das Widerstandssensorelement als oberflächenmontierbares Bauteil (also in SMD-Bauweise) ausgeführt. Dazu können die gegenüberliegenden Enden des Widerstandssensorelements Metallisierungen aufweisen. Widerstandssensorelemente in SMD-Bauweise können beispielsweise in Flip-Chip-Konfiguration auf Landepads angeordnet werden.

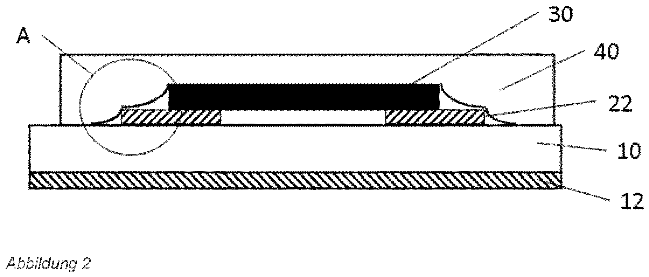

Das Widerstandssensorelement weist vorzugsweise eine Dicke im Bereich von mindestens 30 µm oder mindestens 50 µm auf. Weiterhin weist das Widerstandssensorelement vorzugsweise eine Dicke von höchstens 700 µm auf. Ein dünnes Widerstandssensorelement ist vorteilhaft, da eine darauf angeordnete Abdeckschicht das Widerstandssensorelement abdecken kann, ohne große Gaseinschlüsse zu erzeugen. In diesem Zusammenhang wird zum Beispiel auf Bereich A in Figur 2 verwiesen. Die Dicke wird bevorzugt senkrecht zu der Oberfläche gemessen, auf der die metallische Leiterbahn des Widerstandssensorelements angeordnet ist. Die bevorzugten Längen und Breiten des Widerstandssensorelements liegen im Bereich von 0,3 mm bis 4 mm.

Das Widerstandssensorelement ist mit den mindestens zwei Anschlussleitungen verbunden. Vorzugsweise kontaktiert das Widerstandssensorelement die mindestens zwei Anschlussleitungen jeweils über ein Landepad. In einer optionalen Ausgestaltung der Erfindung kann das Widerstandssensorelement auf einem gedruckten Landepad angeordnet werden, bevor das Landepad gesintert wird.

Das mindestens eine Widerstandssensorelement und die Anschlussleitungen sind zumindest teilweise von einer Abdeckschicht bedeckt. Die Abdeckschicht weist ein flexibles Polymer auf. Vorzugsweise ist das Widerstandssensorelement vollständig mit der Abdeckschicht bedeckt. Weiterhin bevorzugt bleibt von den mindestens zwei Anschlussleitungen jeweils das Anschlusspad frei. Die Abdeckschicht ist vorzugsweise ausgestaltet, um das Widerstandssensorelement zu verkapseln, insbesondere hermetisch zu verkapseln. Dazu ist die Abdeckschicht bevorzugt mit dem isolierenden Polymersubstrat, den Anschlussleitungen und dem Widerstandssensorelement verklebt oder verschweißt. Der verwendete Kleber kann ein temperaturfester Heißkleber, ein Haftklebstoff oder ein *bi-staged* Klebstoff sein. Der zum Verkleben verwendete Kleber kann weiterhin entweder vollflächig oder partiell auf dem isolierenden Polymersubstrat angeordnet sein. Der Kleber, mit dem die Abdeckschicht auf dem isolierenden Polymersubstrat verklebt wird, kann entweder auf dem isolierenden Polymersubstrat oder auf der Abdeckschicht angeordnet sein.

In einer bevorzugten Ausführung der Erfindung weist die Abdeckschicht dasselbe Material auf wie das Polymersubstrat. Optional ist die Abdeckschicht eine Polymerfolie, insbesondere eine Polyimidfolie. Alternativ kann sich das Material der Abdeckschicht von dem Material des Polymersubstrats unterscheiden. Die Abdeckschicht weist vorzugsweise eine Dicke auf, die im Bereich von 5 µm bis 50 µm liegt.

Durch das Verkapseln des Widerstandssensorelement mit der Abdeckschicht, insbesondere enthaltend Polyimid, kann eine sehr gute Durchschlagsfestigkeit erreicht werden, wodurch eine Temperaturmessung am oder sogar im Inneren eines metallischen Leitungselementes eines Steckverbindungselements realisiert werden kann. Im Gegensatz dazu erfolgt die Positionierung eines Temperatursensors in einem Ladestecker des Stands der Technik typischer Weise an einer entfernten Stelle des Steckers, z.B. im Gehäuse, und ist somit indirekter.

Die gesamte Dicke des Temperatursensors aufweisend das Polymersubstrat, das Widerstandssensorelement und die Abdeckschicht, liegt vorzugsweise im Bereich von 10 µm - 1500 µm. Vorzugsweise ist der fertige Temperatursensor flexibel.

Zusätzlich kann das isolierende Polymersubstrat auf der Oberfläche, die keine Anschlussleitungen aufweist, eine Klebeschicht und/oder eine Metallschicht aufweisen.

Der Temperatursensor kann je nach Ausführung eine Temperaturbeständigkeit im Bereich von -196°C und +270°C aufweisen. Kurzfristig kann er sogar Temperaturen von bis zu 400°C standhalten.

Vorzugsweise kann der erfindungsgemäße Temperatursensor über ein Rolle-zu-Rolle-Verfahren hergestellt werden. Das Rolle-zu-Rolle-Verfahren kann folgendermaßen ablaufen.

Das isolierende Polymersubstrat kann als Band von einer Rolle abgerollt werden. Auf das isolierende Polymersubstrat in Bandform wird eine Vielzahl von Anschlussleitungen aufgebracht und insbesondere fixiert. Dies geschieht beispielsweise mittels Druckens oder über das Strukturieren einer Metalldünnschicht mittels lithographischer Verfahren. Das Druckverfahren kann zum Beispiel ein Siebdruckverfahren unter Verwendung metallhaltiger Dickfilmpaste sein. Je nach Bedarf können die aufgebrachten Strukturen nachbehandelt werden. Im Falle eines Siebdruckverfahrens können die Leiterbahnen gesintert werden, um die Leitfähigkeit zu erzielen.

Im nächsten Schritt wird das Polymersubstrate mit den zuvor darauf angeordneten Anschlussleitungen mit Widerstandssensorelementen bestückt. Wenn die Widerstandssensorelemente in SMD-Bauweise ausgeführt sind, können die Widerstandssensorelemente in einem Pick-and- Place-Verfahren, insbesondere einem automatisierten Pick-and-Place-Verfahren, verarbeitet werden.

Anschließend werden die Widerstandssensorelemente mit den Anschlussleitungen über die Landepads stoffschlüssig verbunden, insbesondere verlötet, verklebt oder versintert. Dazu kann das Verbindungsmaterial, also ein Kleber, ein Lotmaterial oder ein Sintermaterial, entweder auf dem Widerstandssensorelement oder auf den Landepads angebracht sein. Für den Fall, dass ein Lot oder Sintermaterial verwendet wird, kann eine Temperaturbehandlung erforderlich sein, um das Verbindungsmaterial in eine mechanisch und elektrisch feste Verbindung umzuwandeln. Wenn das Widerstandssensorelement verlötet wird, kann ein Re-Flow-Verfahren verwendet werden.

Im nächsten Schritt wird eine Abdeckschicht bereitgestellt, z.B. in Form einer Polymerfolie, insbesondere einer Polyimidfolie. Die Abdeckschicht kann optional als kontinuierliches Band von einer Rolle bereitgestellt werden.

Die Abdeckschicht wird mit dem isolierenden Polymersubstrat, das vorzugsweise ebenfalls als Band vorliegt, in Kontakt gebracht, sodass es das mindestens eine Widerstandssensorelement vollständig bedeckt und die Anschlussleitungen zumindest teilweise abdeckt. Anschließend wird die Abdeckschicht mit dem isolierenden Polymersubstrat verbunden, insbesondere verschweißt oder verklebt. Das Verschweißen kann beispielsweise mit einem beheizten Prägestempel oder einer Walze erfolgen, um die Abdeckschicht und das isolierende Polymersubstrat miteinander zu verbinden. Das Verschweißen erfolgt insbesondere im Randbereich um das Widerstandssensorelement herum.

Mit den genannten Schritten kann ein Verbund aus Temperatursensoren erhalten werden, wobei die Temperatursensoren auf einem zusammenhängenden isolierenden Polymersubstrat vorliegen.

In einer möglichen Ausführung wird der Verbund aus mehreren Temperatursensoren anschließend aufgerollt. Der Verbund aus Temperatursensoren kann so leicht und schonend transportiert werden. Weiterhin kann der Verbund aus Temperatursensoren wieder abgerollt werden und die Sensoren können zur weiteren Verarbeitung vereinzelt werden.

In einer anderen Ausführung werden die im Verbund vorliegenden Temperatursensoren nach dem Aufbringen der Abdeckschicht nicht aufgerollt, sondern direkt vereinzelt. Das Vereinzeln kann beispielsweise mittels Schneiden oder Stanzen erfolgen.

In einem zweiten Aspekt betrifft die Erfindung ein Steckverbindungselement, das ausgewählt ist aus einem Stecker und einer Buchse. Das Steckverbindungselement ist üblicher Weise mit einem Kabel, insbesondere einem Stromkabel, verbunden. Das

Steckverbindungselement ist vorzugsweise Teil einer Steckverbindung, die aus einem Stecker mit der komplementären Buchse besteht. Das Steckverbindungselement weist zumindest ein metallisches Leitungselement zur Leitung von elektrischem Strom auf. Als Leitungselement kann das Bauteil verstanden werden, über das das Steckverbindungselement mit einem weiteren Steckverbindungselement in Kontakt steht, z.B. über das der Stecker elektrisch mit der Buchse verbunden ist. Dies ist meist auch das Teil durch das die höchsten Ströme fließen. Im Falle eines Steckers kann das metallische Leitungselement auch als Pin bezeichnet werden.

Zusätzlich weist ein Steckverbindungselement üblicherweise ein Gehäuse auf, in dem das metallische Leitungselement elektrisch isolierend fixiert ist. Das Gehäuse umschließt meistens auch den Anschluss des Leitungselements an weitere Komponenten, wie z.B. ein Kabel.

Das metallische Leitungselement hat eine Oberfläche. Auf dieser Oberfläche ist ein erfindungsgemäßer Temperatursensor angeordnet. Der Temperatursensor kann an dem Leitungselement mittels einer stoffschlüssigen, formschlüssigen oder kraftschlüssigen Verbindung fixiert werden. Der erfindungsgemäße Temperatursensor kann direkt mit dem metallischen Leitungselement in Kontakt stehen, also über das isolierende Polymersubstrat oder über die Abdeckschicht oder über beide. Direkt, bedeutet hier, dass zwischen dem Temperatursensor und dem metallischen Leitungselement keine weiteren Materialien angeordnet sind. Alternativ kann zwischen dem metallischen Leitungselement und dem Temperatursensor ein Verbindungsmaterial angeordnet sein. Das Verbindungsmaterial kann ein Kleber, insbesondere ein thermisch leitfähiger Kleber oder eine Wärmeleitpaste sein. Der Kleber kann vorzugsweise dazu dienen den Temperatursensor auf der Oberfläche des metallischen Leitungselement mechanisch zu befestigen. Zusätzlich ist es vorteilhaft, wenn der Kleber eine hohe thermische Leitfähigkeit aufweist. Eine Wärmeleitpaste dient vorzugsweise dazu die thermische Anbindung des Temperatursensors an die Oberfläche zu verbessern.

In einer anderen bevorzugten Ausführung kann das metallische Leitungselement auf der Oberfläche eine Vertiefung aufweisen. Bevorzugt ist die Vertiefung so ausgestaltet, dass sie den Temperatursensor teilweise oder vollständig aufnehmen kann. In einer Ausgestaltung der Erfindung ist die Vertiefung ausgestaltet, den Temperatursensor flach liegend aufzunehmen, also so, dass entweder das isolierende Polymersubstrat oder die Abdeckschicht die Oberfläche des metallischen Leitungselement mechanisch kontaktiert. In einer weiteren Ausgestaltung ist die Vertiefung als Schlitz ausgestaltet. In diesem Fall kann der Temperatursensor, ähnlich einem Brief in einen Briefkasten, in den Schlitz gesteckt werden. Bevorzugt ist der Schlitz so tief, dass das Widerstandssensorelement des Temperatursensors in dem Schlitz eingelassen werden kann. Auf diese Weise kann eine besonders gute thermische Ankopplung des Temperatursensors an das metallische Leitungselement erreicht werden. In einer weiteren Variante kann die Vertiefung ein rundes Bohrloch sein. In dieses Bohrloch kann der Temperatursensor beispielsweise gebogen eingeführt sein und sich auf Grund seiner Federwirkung an die Innenwand des Bohrlochs anschmiegen. Eine schlitzförmige Vertiefung ist im metallischen Leitungselement vorzugsweise entlang der Stromleitungsrichtung angeordnet, um den Leitungsquerschnitt nicht unnötig zu reduzieren, den Wärmestrom nicht zu behindern und eine homogene Temperaturverteilung im metallischen Leitungselement zu ermöglichen.

In einer bevorzugten Ausführungsform weist das Steckverbindungselement eine Leiterplatte auf. Vorzugsweise weist die Leiterplatte mindestens zwei Anschlüsse auf. Die Leiterplatte kann eine gedruckte Leiterplatte (*printed circuit board*, PCB) sein. Auf der Leiterplatte können weitere Komponenten angeordnet sein. Eine mit elektronischen Komponenten bestückte Leiterplatte kann auch als Platine bezeichnet werden. Die Komponenten können elektronische Bauteile, wie zum Beispiel Halbleiterbauteile oder Logikschaltungen sein.

Mit Hilfe von Logik-Komponenten können die erfassten Widerstandswerte weiterverarbeitet werden, um z.B. weitere Aktionen auszulösen, wie etwa die Reduzierung des Ladestroms bei einer Überhitzung des Steckverbindungselements in einem Ladestecker.

Die Anschlussleitungen des Temperatursensors kontaktieren die Leiterplatte. Besonders bevorzugt erfolgt die Kontaktierung der Leiterplatte direkt, also ohne zusätzliche Drähte oder Kabel. Die Kontaktierung der Leiterplatte kann stoffschlüssig, formschlüssig oder kraftschlüssig erfolgen. Insbesondere erfolgt die Kontaktierung über die Anschlusspads der Anschlussleitungen. Die Anschlusspads können im Falle einer stoffschlüssigen Verbindung beispielsweise über eine Lötverbindung, eine Sinterverbindung, einer Schweißverbindung oder einer elektrisch leitfähigen Klebeverbindung mit mindestens zwei Anschlüssen der Leiterplatte verbunden werden. Alternativ ist auch eine Verbindung der Anschlussleitungen über Steckverbinder mit der Leiterplatte möglich.

Besonders vorteilhaft ist es, wenn der Temperatursensor flexibel ist, sodass der Bereich, der die Anschlussleitungen aufweist, zur Leiterplatte bzw. zu den Kontakten der Leiterplatte, hingebogen werden kann. Dies kann die Verwendung von Drähten oder Kabeln überflüssig machen.

In einem dritten Aspekt betrifft die Erfindung ein automatisiertes Verfahren zur Herstellung von mehreren Steckverbindungselementen gemäß der Erfindung, dadurch gekennzeichnet, dass mehrere erfindungsgemäße Temperatursensoren, als Verbund aus miteinander verbundenen Temperatursensoren bereitgestellt werden. Vorzugsweise kann der Verbund ein aufgerolltes Band von miteinander verbundenen Temperatursensoren sein.

Im nächsten Schritt kann der Verbund abgerollt werden. Danach kann ein Temperatursensor des Verbundes entweder vom Verbund abgetrennt werden, um ihn als vereinzelten Temperatursensor auf einem metallischen Leitungselement anzuordnen oder der Temperatursensor wird als Teil des Verbundes zum metallischen Leitungselement des Steckverbindungselement geführt, um dort auf oder in der Nähe der Oberfläche vereinzelt zu werden.

Der vereinzelte bereitgestellte Temperatursensor wird vorzugsweise mittels maschineller Bestückung auf der Oberfläche des metallischen Leitungselements angeordnet. Dies erlaubt eine hohe Präzision und eine hohe Reproduzierbarkeit in der Herstellung von Steckverbindungselementen.

Weiterhin ist es bevorzugt, dass die Anschlussleitungen mit der Leiterplatte elektrisch verbunden werden. Dies geschieht vorzugsweise über die Anschlusspads der Anschlussleitungen. Insbesondere erfolgt auch dieses Verbinden mit Hilfe eines automatisierten Prozesses. Dies wird insbesondere dadurch ermöglicht, dass die Anschlussleitungen, die optional Anschlusspads aufweisen, auf dem isolierenden Polymersubstrat im Temperatursensor fixiert sind. Dazu im Gegensatz stehen Temperatursensoren im Stand der Technik, bei denen die Anschlussleitungen als Drähte ausgeführt sind, die frei aus einem Sensorelement herausragen.

Anschließend wird der vereinzelte Temperatursensor optional stoffschlüssig, kraftschlüssig oder formschlüssig fixiert. Die stoffschlüssige Fixierung erfolgt vorzugsweise mittels Kleben. Die kraftschlüssige Verbindung erfolgt beispielsweise mittels Klemmen.

In einer weiteren möglichen Ausführung können mehrere erfindungsgemäße Temperatursensoren als Verbund bereitgestellt werden und ein Temperatursensor des Verbundes wird als Teil des Verbundes bis an die Oberfläche des Leitungselements geführt. Dort kann der Temperatursensor auf der Oberfläche direkt vereinzelt und fixiert werden. Die Positionierung erfolgt somit über den Verbund aus Temperatursensoren. Das Fixieren kann zum Beispiel durch Verwendung eines wärmeleitenden Klebstoffs erreicht werden. Alternativ kann der Temperatursensor form- oder kraftschlüssig fixiert werden, z.B. mittels Klemmen.

### Kurzbeschreibung der Figuren

Abbildung 1 zeigt eine schematische Darstellung eines Temperatursensors in der Draufsicht.

Abbildung 2 zeigt eine schematische Darstellung eines Temperatursensors im Querschnitt.

Abbildung 3 zeigt eine perspektivische Darstellung eines Steckverbindungselement in Form eines Steckerpins in die ein Temperatursensor eingelassen ist.

Abbildung 4 zeigt eine schematische Darstellung eines Steckverbindungselement in Form einer Ladesteckerbuchse an der ein Temperatursensor angebracht ist.

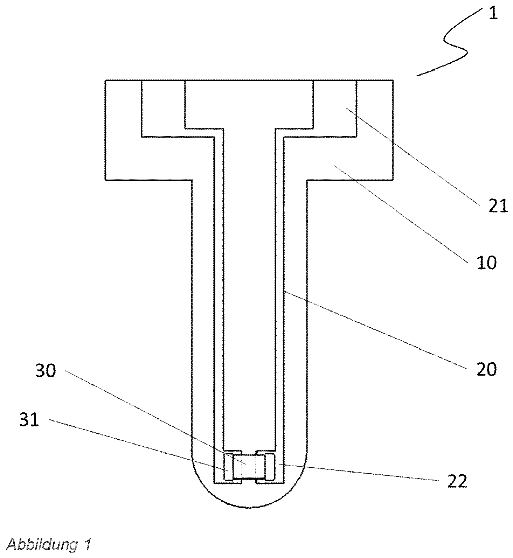

In Abbildung 1 zeigt einen Temperatursensor (1) in der Draufsicht. Auf einem isolierenden Polymersubstrat (10) sind zwei Anschlussleitungen (20) angeordnet. Die Anschlussleitungen (20) umfassen jeweils ein Anschlusspad (21) und ein Landepad (22). Auf den Landepads (22) der Anschlussleitungen (20) ist ein Widerstandssensorelement (30) angeordnet, das über Anschlussmetallisierungen (31) mit den Landepads verbunden ist.

Abbildung 2 zeigt einen Temperatursensor (1) im Querschnitt im Bereich des Widerstandssensorelement (30). Auf dem isolierenden Polymersubstrat (10) ist ein Widerstandssensorelement (30) angeordnet. Das Widerstandssensorelement (30) ist mit einer Abdeckschicht (40) bedeckt. Die Abdeckschicht (40) ist mit dem isolierenden Polymersubstrat (10) vorzugsweise so verbunden, dass das Widerstandssensorelement hermetisch verkapselt ist und so vor Umwelteinflüssen geschützt ist. In der Abbildung 2 ist eine bevorzugte Ausführung dargestellt, bei der die Abdeckschicht (40) möglichst formschlüssig auf dem Widerstandssensorelement (30) und dem isolierenden Polymersubstrat (10) angeordnet ist. So kann der Hohlraum im Übergangsbereich (A) möglichst klein sein. Diese Ausführung lässt sich insbesondere dann realisieren, wenn das Widerstandssensorelement (30) möglichst dünn ausgeführt ist, z.B. mit einer Höhe von etwa 50 µm, insbesondere von etwa 30 µm. Optional weist das isolierende Polymersubstrat (10) auf der Seite, die der Seite mit dem Widerstandssensorelement (30) gegenüber liegt, eine Metallisierung (12) auf. Die Metallisierung (12) kann z.B. für eine verbesserte thermische Anbindung sorgen.

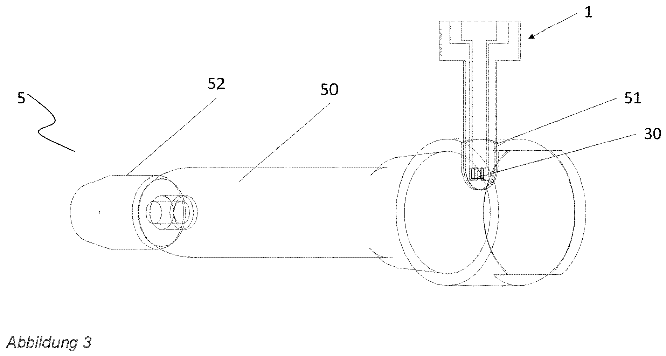

Abbildung 3 zeigt ein Steckverbindungselement (5), das hier beispielhaft als Pin ausgebildet ist. Das Leitungselement (50) weist eine Vertiefung (51) auf. Der Temperatursensor (1) wird in die Vertiefung (51) gesteckt. Das Widerstandssensorelement (30) ist hier vollständig innerhalb des Leitungselements (50) integriert. Im dargestellten Beispiel weist das Leitungselement (50) eine Schutzkappe (52) auf, die vermeiden kann, dass das Leitungselement (50) versehentlich kontaktiert werden kann, wenn es in einem Stecker oder einer Buchse angeordnet ist.

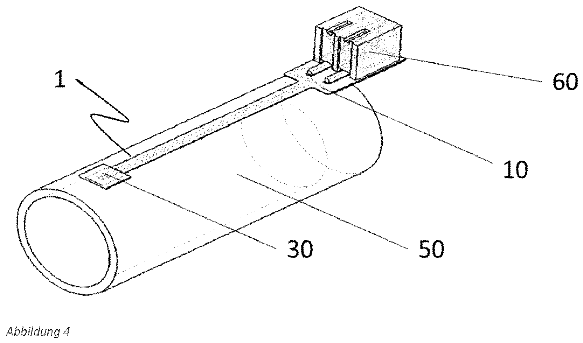

Abbildung 4 zeigt schematisch ein Leitungselement (50) in Form einer Hülse, insbesondere in Form einer Ladesteckerbuchse. Die Hülse dient der Aufnahme eines stromführenden Steckerpins. Auf der Oberfläche der Hülse ist im direkten thermischen Kontakt mit der Hülse ein Temperatursensor (1) angebracht. Bevorzugt befindet sich das Widerstandssensorelement (30) des Temperatursensors (1) nahe dem Bereich der Hülse, an dem die höchste Temperatur während des Ladevorgangs auftritt. Der Temperatursensor weist ein isolierendes Polymersubstrat (z.B. aus Polyimid), vier Anschlussleitungen (nicht gezeigt) und einen flexiblen 2,5°kOhm SMD-Flip-Chip als Widerstandssensorelement (30) auf. Der SMD-Flip-Chip ist mit den vier Landepads, die jeweils das eine Ende der Anschlussleitungen bilden, elektrisch verbunden, so dass eine Vierpunkt-Verschaltung möglich ist. Die vier Anschlusspads am anderen Ende der Anschlussleitungen (20) sind mit einem Steckerclip (60) verbunden. Das isolierende Polymersubstrat (10) ist mit einer Abdeckschicht (40) bedeckt, wobei die Abdeckschicht (40) eine mit einem Haftkleber beschichtete Polyimidschicht umfasst. Die Abdeckschicht (40) überdeckt das Widerstandssensorelement (30) vollständig und die Anschlussleitungen (20) bis zum Steckerclip (60). Die Gesamtdicke des Temperatursensors (1) beträgt im Bereich des Widerstandssensorelements (30) beispielsweise 250°µm.

### Bezugszeichenliste

- 1: Temperatursensor
- 5: Steckverbindungselement
- 10: isolierendes Polymersubstrat
- 12: Klebeschicht
- 20: Anschlussleitung
- 21: Anschlusspad
- 22: Landepad
- 30: Widerstandssensorelement
- 31: Anschlussmetallisierungen
- 40: Abdeckschicht
- 50: Leitungselement
- 51: Vertiefung
- 52: Schutzkappe
- 60: Steckerclip
- A: Übergangsbereich

## Patentansprüche

1. Temperatursensor aufweisend
- ein isolierendes Polymersubstrat,
- mindestens zwei Anschlussleitungen und
- mindestens ein Widerstandssensorelement,
wobei die mindestens zwei Anschlussleitungen auf dem Polymersubstrat angeordnet sind, wobei das mindestens eine Widerstandssensorelement mit den Anschlussleitungen verbunden ist und wobei das mindestens eine Widerstandssensorelement und die Anschlussleitungen zumindest teilweise von einer Abdeckschicht aufweisend ein flexibles Polymer bedeckt sind.

2. Temperatursensor gemäß Anspruch 1, wobei das mindestens eine Widerstandssensorelement eine metallisch leitende Widerstandsstruktur umfasst, die bevorzugt Platin aufweist.

3. Temperatursensor gemäß einem der vorigen Ansprüche, wobei das isolierende Polymersubstrat eine elektrische Durchschlagsfestigkeit von mindestens 100 KV/mm aufweist.

4. Temperatursensor gemäß einem der vorigen Ansprüche, wobei die Anschlussleitungen mit dem isolierenden Polymersubstrat stoffschlüssig verbunden sind.

5. Temperatursensor gemäß einem der vorigen Ansprüche, wobei das mindestens eine Widerstandssensorelement in einer oberflächenmontierbaren Bauweise ausgeführt ist.

6. Temperatursensor gemäß einem der vorigen Ansprüche, wobei der Temperatursensor eine Dicke aufweist, die im Bereich von 10 µm - 1500 µm liegt.

7. Steckverbindungselement ausgewählt aus einem Stecker und einer Buchse, wobei das Steckverbindungselement mindestens ein metallisches Leitungselement zur Leitung von elektrischem Strom aufweist, wobei auf der Oberfläche des metallischen Leitungselements ein Temperatursensor gemäß einem der Ansprüche 1 - 6 angeordnet ist.

8. Steckverbindungselement gemäß Anspruch 7, wobei das Leitungselement eine Vertiefung aufweist und der Temperatursensor in der Vertiefung angeordnet ist.

9. Steckverbindungselement gemäß einem der Ansprüche 7 oder 8, wobei die Vertiefung ein Schlitz ist, in den der Bereich des Temperatursensors, der das Widerstandssensorelement enthält, vollständig eingelassen ist.

10. Steckverbindungselement gemäß einem der Ansprüche 7 - 9, aufweisend eine Leiterplatte wobei die Anschlussleitungen des Temperatursensors eine Leiterplatte kontaktieren, insbesondere ohne Verwendung von Drähten oder Kabel.

11. Steckverbindungselement gemäß einem der Ansprüche 7 -10, wobei die Anschlussleitungen des Temperatursensors die Leiterplatte über eine stoffschlüssige, formschlüssige oder kraftschlüssige Verbindung kontaktieren.

12. Steckverbindungselement gemäß einem der Ansprüche 7 -11, wobei die stoffschlüssige Verbindung ausgewählt ist aus der Gruppe bestehend aus einer Lötverbindung, einer Sinterverbindung, einer Schweißverbindung und einer leitfähigen Klebeverbindung.

13. Steckverbindungselement gemäß einem der Ansprüche 7 -12, wobei der Temperatursensor an dem Leitungselement mittels einer stoffschlüssigen, formschlüssigen oder kraftschlüssigen Verbindung fixiert ist.

14. Automatisiertes Verfahren zur Herstellung von mehreren Steckverbindungselementen gemäß einem der Ansprüche 7 -13, **dadurch gekennzeichnet, dass** mehrere Temperatursensoren als Verbund aus miteinander verbundenen Temperatursensoren gemäß einem der Ansprüche 1-6, bereitgestellt wird.

15. Automatisiertes Verfahren gemäß Anspruch 14, **dadurch gekennzeichnet, dass** der Temperatursensor, der Teil eines Verbundes ist, vor der Montage im Steckverbindungselement vereinzelt wird.

16. Automatisiertes Verfahren gemäß einem der Ansprüche 14 oder15, dass der vereinzelte bereitgestellte Temperatursensor mittels einer maschinellen Bestückung auf der Oberfläche des metallischen Leitungselements angeordnet wird.
